# EUROPÄISCHE PATENTSCHRIFT

(11) **EP 0 795 574 B1**
(45) Veröffentlichungstag und Bekanntmachung des Hinweises auf die Patenterteilung: **31.05.2006**
(21) Anmeldenummer: 97103301.4
(22) Anmeldetag: 28.02.1997
(51) Int. Cl.: C08J 5/18, B32B 27/20, C08K 7/00

(54) **Folie mit einseitig rauher Siegelschicht und daraus hergestellte Verbundfolien**
Foil with rough sealable layer on one side, and composite foils produced therefrom
Feuille ayant d'un côté une couche rugueuse soudable et feuilles composites préparées à partir de celle-ci

(30) Priorität: 13.03.1996 DE 19609744
(43) Veröffentlichungstag der Anmeldung: 17.09.1997
(73) Patentinhaber: WOLFF WALSRODE AG, 29655 Walsrode (DE)
(72) Erfinder: Tamke, Heiko, 29699 Bomblitz (DE)
(74) Vertreter: Kutzenberger, Helga

(56) Entgegenhaltungen:
- EP-A- 0 135 982
- EP-A- 0 177 872
- EP-A- 0 421 331
- JP-A- 63 020 334

## Beschreibung

Die vorliegende Erfindung betrifft eine mindestens zweischichtige, durch Coextrusion hergestellte Folie, die als Heißsiegelschicht in Verbundfolien eingesetzt wird und die sich durch eine einseitig rauhe Oberfläche bei gleichzeitig guten Gleiteigenschaften auszeichnet. Ebenso betrifft die Erfindung Verbundfolien, zu deren Herstellung diese Heißsiegelschicht verwendet wird.

Die Verwendung von mehrschichtigen Verbundfolien für die Verpackung verschiedenster Füllgüter ist Stand der Technik. Durch die schichtweise Kombination von Folien mit unterschiedlichen Eigenschaften erhält man Verbundfolien mit einem Eigenschaftsprofil, das demjenigen der Einzelfolien weit überlegen ist. Verbundfolien bestehen üblicherweise aus mindestens einer "Trägerfolie", die gegebenenfalls bedruckt sein kann und einer Heißsiegelschicht. Typische Trägerfolien sind z.B. biaxial gereckte Folien aus Polypropylen, Polyester oder Polyamid. Bekannt sind auch eine Vielzahl von Trägerfolienkombinationen wie z.B. Polyester / Aluminium oder Polyester / metallisierter Polyester. Die Heißsiegelschichten werden üblicherweise aus Polyethylen, Polypropylen und/oder deren Copolymeren hergestellt. Die Verarbeitung dieser Verbundfolien erfolgt überwiegend auf Verpackungsmaschinen, in denen aus den Folien ein Behälter geformt, dieser befüllt und anschließend versiegelt wird ("Form-Fill-Seal").

Die Siegelschichten besitzen einen entscheidenden Einfluß auf die Funktionsfähigkeit einer Verbundfolie. Sie sind nicht nur für die Siegeleigenschaften verantwortlich, sondern bestimmen ebenso entscheidend wichtige Eigenschaften einer Verbundfolie wie Gleitfähigkeit, Temperaturbeständigkeit, Chemikalienbeständigkeit usw. mit.

Die Gleiteigenschaften einer Siegelschicht werden bei Bedarf mit Hilfe von Additiven wie Gleit- und Antiblockmitteln auf das gewünschte Niveau eingestellt. Die Additive werden oft bei der Herstellung der Kunststoffe in einer praxisgerechten Dosierung zugegeben, können aber auch bei der Herstellung der Folie über ein Masterbatch zugesetzt werden.

Typische Gleitmittel für Polyolefine die auch in der vorliegenden Erfindung eingesetzt werden sind zum Beispiel Fettsäureamide wie Erucasäureamid oder Ölsäureamid, die aufgrund ihrer Unverträglichkeit mit dem Polymer an die Folienoberfläche wandern und dort einen Gleitfilm bilden.

Bei Antiblockmitteln handelt es sich um anorganische oder organische Stoffe in sehr feinen Korngrößen, die dem Polymer zugegeben werden, um die Folienoberfläche aufzurauhen und damit ein flächiges Haften der Folie zu reduzieren. Um die Transparenz und den Glanz der Siegelschicht und damit der Verbundfolie möglichst wenig zu beeinträchtigen, benutzt man im allgemeinen Antiblockmittel mit einem mittleren Partikeldurchmesser kleiner als 5 µm. Auf diese Weise erhält man Siegelschichten mit gewissen Antiblockeigenschaften, die relativ ebene Oberflächen besitzen und damit trotz der Additivierung einen hohen Glanz aufweisen. Typische Antiblockmittel sind anorganische Materialien wie zum Beispiel Kieselsäure und deren Derivate, Titandioxid oder Calciumcarbonat. Als Antiblockmittel können auch organische Stoffe eingesetzt werden, die sich nicht im Polymer lösen, das die Matrix der Folie bildet, sondern die in diesem Polymer als getrennte Phase homogen verteilt sind und die ihre ursprüngliche Partikelgrößenverteilung im wesentlichen beibehalten. Typische organische Antiblockmittel sind beispielsweise Duroplaste, Polyolefine mit einem sehr hohen Molekulargewicht oder vernetzte Polymere.

Ebene Folienoberflächen wie oben beschrieben bringen in verschiedenen Verarbeitungsschritten jedoch Nachteile mit sich:

Eine Verbundfolie weist immer gewisse Dickenunterschiede über der Breite auf, die beispielsweise durch Dickenschwankungen der Einzelfolien oder bei teilflächig bedruckten Folien durch die Druckfarbenschichten verursacht werden. Liegen auf einer Folienrolle über mehrere Wicklungen immer dicke oder immer dünne Lagen übereinander, kann es aufgrund des unterschiedlich starken Wickeldruckes zu Überdehnungen in der Folie und damit zu Planlagemängeln kommen. Dieses Problem ist umso stärker ausgeprägt, je ebener die beteiligten Folienoberflächen sind.

Besonders frühsiegelnde Siegelschichten werden üblicherweise aus Polyethylen oder Ethylen-Copolymeren mit einem hohen amorphen Anteil hergestellt. Diese Folien besitzen eine starke Klebeneigung gegen sich selbst und andere Oberflächen, so daß bei Lagerung der Folie auf Rolle die Gefahr des Verblockens besteht. Je ebener die Oberfläche der Folie ist, desto höher ist die Blockneigung.

Verpackungsmaschinen verfügen oft über polierte, fest eingebaute Metallflächen, über die die Verbundfolie gleiten muß. Besitzt die Folienoberfläche eine zu ebene Oberfläche, kann es speziell bei intermittierendem Folienabzug auch hier zum Blocken kommen mit der Folge von Folienstauchern und Produktionsausfällen.

Die geschilderten Probleme sind um so größer, je weicher, d.h. amorpher die eingesetzten Polymere sind. In solchen Fällen wäre eine Siegelschicht mit einer rauhen Oberfläche für die Verarbeitbarkeit von Vorteil. Aus der Literatur sind verschiedene Methoden bekannt, um die Oberfläche einer Siegelschicht aufzurauhen.

So kann man bei der Herstellung von Folien ausnutzen, daß bei der Extrusion von bestimmten Polymeren wie LLDPE oder HDPE sogenannter Schmelzbruch auftritt, wobei durch alternierendes Gleiten und Haften der Polymerschmelze an der Oberfläche des Extrusionswerkzeuges eine rauhe Oberfläche erzeugt wird. Solche Folien entsprechen dem Stand der Technik. Der Grad der Rauhigkeit ist jedoch stark von der Temperatur des Extrusionswerkzeuges abhängig und verändert sich in Abhängigkeit von der Temperatur. Damit ist dieses Verfahren nicht geeignet, um die Rauhigkeit einer Folienoberfläche konstant und reproduzierbar einzustellen. Außerdem ist dieses Verfahren auf die Polymere beschränkt, bei denen Schmelzbruch hervorgerufen werden kann.

Eine andere Methode, um rauhe Folienoberflächen herzustellen, ist das Einmischen eines unverträglichen Polymers in eine Polymermatrix. Im deutschen Patent 2 244 703 ist ein Verfahren zur Herstellung eines gut gleitenden und nicht klebenden Polypropylenfilms mit guter Transparenz beschrieben, in dem durch das Einmischen von z.B. PA6 oder PETP in Polypropylen eine rauhe Oberfläche geschaffen wird und auf den Einsatz von anorganischen Antiblockmitteln verzichtet werden kann. Um die gewünschten Eigenschaften zu erzielen, ist jedoch die genaue Einhaltung von Mischprozeduren, Verfahrensparametern und Stoffgrößen vorgeschrieben. Das Verfahren ist also von vielen Einflußgrößen abhängig und eine Reproduzierbarkeit damit nur mit großem Aufwand möglich.

Im europäischen Patent 0 342 822 ist ein Verfahren beschrieben, bei dem einer Folie zwischen einer beheizten Prägewalze und einer glatten Walze eine rauhe Oberfläche aufgeprägt wird. Die rauhe Oberfläche reduziert die Blockneigung der Folie. Für unterschiedliche Polymere benötigt man unterschiedliche Prägetemperaturen, die einerseits so hoch sein müssen, um das Polymer im Prägespalt dauerhaft zu verformen, andererseits jedoch einen Maximalwert nicht überschreiten dürfen, um ein Kleben an den Walzen zu vermeiden. Um unterschiedliche Rauhigkeiten einzustellen, muß die Prägewalze ausgetauscht werden. Dieses Verfahren ist also recht aufwendig, wenn man in der Produktion häufig einen Materialwechsel vornimmt. Zudem ist zur Umsetzung eine Anlageninvestition und ein Eingriff in vorhandene Produktionsanlagen notwendig.

Alle hier beschriebenen Verfahren zur Erzeugung einer rauhen Folienoberfläche weisen gewisse Nachteile auf. Es stellte sich daher die Aufgabe, eine Siegelschicht mit einer rauhen Oberfläche zu entwickeln, die folgende Bedingungen erfüllt:
- reproduzierbare Rauhigkeit
- vergleichbares Reibverhalten wie Folien mit einer ebenen Oberfläche
- Reduzierung des Wickeldruckes in Folienrollen gegenüber Folien mit einer ebenen Oberfläche
- keine Einschränkung im Hinblick auf die eingesetzten Polymere
- einfache Herstellung auf marktüblichen Folienanlagen ohne Zusatzinvestitionen.

Erfindungsgemäß gelang dies, indem einer der Außenschichten einer mehrschichtigen coextrudierten Folie organische oder anorganische Partikel in Mengen zwischen 1000 ppm und 8000 ppm zugesetzt wurde, deren maximaler Partikeldurchmesser größer als die Dicke der ausgerüsteten Folienschicht ist und deren mittlerer Partikeldurchmesser größer als 10 µm ist und bevorzugt zwischen 10 µm und 50 µm liegt sowie durch die Zugabe eines Gleitmittels in Mengen von mindestens 300 ppm bezogen auf die gesamte Foliendicke. Die Zugabe von Partikeln einer definierten Partikelgrößenverteilung in eine Folienschicht bestimmter Dicke ermöglicht die Herstellung von Folienoberflächen mit reproduzierbarer Rauhigkeit.

Überraschenderweise besitzt die erfindungsgemäße Folie einen Reibungskoeffizienten, der in derselben Größenordnung liegt wie bei einer Folie mit den üblichen Antiblockmitteln geringen Durchmessers. Dies ist insbesondere deshalb überraschend, da die erfindungsgemäß eingesetzten Partikel ohne Zugabe von Gleitmitteln ausdrücklich als Antislipmittel eingesetzt werden, d.h. sie erhöhen den Reibungskoeffizienten einer Folie erheblich. Die Meßwerte der Reibungskoeffizienten für die Beispielfolien 2 und 3 in Tabelle 2 belegen dies deutlich.

Die Wickelhärte von erfindungsgemäß hergestellten Folien ist deutlich geringer als bei Folien, die mit üblichen Antiblockmitteln hergestellt wurden, wie der Vergleich der Beispielfolie 1 mit den Beispielfolien 4 bis 7 zeigt (s. Tabelle 2). Die in Tabelle 2 aufgeführten Meßwerte für die Beispielfolien 2 und 3 zeigen jedoch auch, daß überraschenderweise ohne den Zusatz von Gleitmittel auch die Folien eine hohe Wickelhärte besitzen, die mit Partikeln großen Durchmessers hergestellt wurden. Nur die Kombination von Partikeln großen Durchmessers und Gleitmitteln führt zur gewünschten Reduzierung der Wickelhärte.

Über die Dicke der additivhaltigen Folienschicht, die die Partikel großen Durchmessers enthält, läßt sich die Oberflächenrauhigkeit in gewissen Grenzen steuern. Je dicker die Folienschicht ist, desto mehr Partikel können "geschluckt" werden und stehen nicht mehr für die Aufrauhung der Oberfläche zur Verfügung, so daß die Wickelhärte wieder zunimmt. Der Vergleich der Wickelhärte für die Beispielfolien 4 und 5 und die Beispielfolien 6 und 7 belegen dies (s. Tabelle 2).

Die Zugabe der Partikel großen Durchmessers erfolgt vorzugsweise über ein Masterbatch, so daß keine Anlageninvestitionen für die Herstellung der erfindungsgemäßen Folie notwendig sind. Da die Partikel großen Durchmessers nur einer der äußeren Schichten der Folie zugegeben werden müssen, ist zudem ein äußerst sparsamer Einsatz des Additivs möglich.

Durch die Zugabe von Partikeln großen Durchmessers erhöht sich die Trübung bzw. verringert sich der Glanz einer Folie gegenüber einer Ausrüstung mit üblichen Antiblockmitteln. Deshalb empfielt sich der Einsatz dieser Siegelschicht besonders in nicht transparenten Verbundfolien, d.h. beispielsweise in Verbundfolien, die eine Metallschicht vorzugsweise eine Aluminiumfolie oder eine eingefärbte Schicht enthalten oder die vollflächig bedruckt sind wobei die rauhe Seite der Folie Außenseite der Verbundfolie bildet. Alle erfindungsgemäßen Folien finden bei der Herstellung von Verpackungen für Lebensmittel Verwendung.

### Meßverfahren

Die Messung der Wickelhärte wurde mit einem Densimeter der Fa. Zwick durchgeführt.

Das Reibverhalten wurde mit zwei Meßmethoden charakterisiert:
- nach DIN 53375
- nach WW 1411 (interne Methode der Wolff Walsrode AG) Diese Methode eignet sich besonders zur Charakterisierung des Reibverhaltens von Folien bei hohen Andruckkräften, wie sie z.B. an der Formatschulter einer Schlauchbeutelmaschine auftreten.

### Beispiele

Alle im folgenden verglichenen Folien wurden unter gleichen Bedingungen an der gleichen Blasfolienanlage hergestellt. Sie wurden mit einer Gesamtschichtdicke von 80 µm dreischichtig coextrudiert. Alle drei Schichten bestehen aus einem Blend aus 50 % LDPE und 50 % LLDPE, lediglich die Additivierung mit Gleit- und Antiblockmitteln sowie mit Partikeln großen Durchmessers ist unterschiedlich.

| | LDPE | LLDPE |
|---|---|---|
| Dichte: | 0,923 g/cm³ | 0,919 g/cm³ |
| Schmelzindex: | 2,0 g/10 min | 0,8 g/10 min (1,90°C, 2,16 kg) |
| Kristallitschmelzpunkt: | 111°C | 122°C |

In Tabelle 1 sind für die Beispielfolien jeweils folgende Werte aufgeführt:
- Dicke der speziell ausgerüsteten Folienschicht
- Menge, Art und mittlerer Teilchendurchmesser der zugesetzten Partikel in der speziell ausgerüsteten Folienschicht
- Menge und Art des Gleitmittels in der gesamten Folie

**Tabelle 1: Rezepturen der Beispielfolien Rezeptur: 50 % LDPE 50 % LLDPE Gesamtdicke: 80 µm**

| | Schichtdicke der äußeren Schicht | Partikel der äußeren Schicht | | | Gleitmittel in der gesamten Folie | |
|---|---|---|---|---|---|---|
| | | Menge | Art | mittl. Durchmesser | Menge | Art |
| 1 | 20 µm | 900 ppm | SiO₂ | <5 µm | 500 ppm | ESA |
| 2 | 20 µm | 6000 ppm | CaCO₃ | 15 µm | - | - |
| 3 | 20 µm | 2000 ppm | PMMA | 37 µm | - | - |
| 4 | 15 µm | 6000 ppm | CaCO₃ | 15 µm | 500 ppm | ESA |
| 5 | 20 µm | 6000 ppm | CaCO₃ | 15 µm | 500 ppm | ESA |
| 6 | 15 µm | 2000 ppm | PMMA | 37 µm | 500 ppm | ESA |
| 7 | 20 µm | 2000 ppm | PMMA | 37 µm | 500 ppm | ESA |

SiO₂ = Kieselsäure CaCO₃ = Calciumcarbonat
PMMA = Polymethylmethacrylat ESA = Erucasäureamid

**Tabelle 2: Meßwerte zu den Beispielfolien**

| | Wickelhärte | Reibungskoeffizienten | | | | | |
|---|---|---|---|---|---|---|---|
| | | nach DIN 53 375 | | | | nach WW 1411 | |
| | | b/M | | b/b | | b/M | b/b |
| | | Haft | Gleit | Haft | Gleit | | |
| 1 | 85,33 | 0,17 | 0,24 | 0,08 | 0,13 | 0,13 | 0,14 |
| 2 | 85,67 | 0,21 | 0,31 | 0,28 | 0,38 | 0,59 | 0,98 |
| 3 | 87,17 | 0,20 | 0,26 | 0,35 | 0,40 | 0,65 | 0,98 |
| 4 | 77,50 | 0,16 | 0,27 | 0,12 | 0,17 | 0,14 | 0,15 |
| 5 | 79,67 | 0,17 | 0,27 | 0,09 | 0,14 | 0,14 | 0,14 |
| 6 | 80,33 | 0,16 | 0,26 | 0,08 | 0,12 | 0,15 | 0,14 |
| 7 | 81,33 | 0,16 | 0,26 | 0,10 | 0,12 | 0,13 | 0,13 |

| | | | | | | | |
|---|---|---|---|---|---|---|---|
| b/M = rauhe Folienseite gegen Metall b/b = rauhe Folienseite gegen sich selbst | | | | | | | |

In Tabelle 2 sind für die Beispielfolien folgende Meßwerte aufgeführt:
- Wickelhärte von Folienrollen gleicher Lauflänge
- Reibungskoeffizienten der aufgerauhten Folienseite gegen Metall und gegen sich selbst nach DIN 53 375
- Reibungskoeffizienten der aufgerauhten Folienseite gegen Metall und gegen sich selbst nach WW 1411 (interne Methode der Wolff Walsrode AG).

Die Rezeptur der Beispielfolie 1 stellt den Stand der Technik dar, indem ein Antiblockmittel mit einem mittleren Partikeldurchmesser kleiner 5 µm eingesetzt wird.

Die Rezepturen der Beispielfolien 2 und 3 beinhalten jeweils anorganische bzw. organische Partikel mit einem mittleren Partikeldurchmesser zwischen 10µm und 50 µm und sind gleitmittelfrei.

Die Rezepturen der Beispielfolien 4 bis 7 sind erfindungsgemäß, d.h. sie beinhalten jeweils anorganische bzw. organische Partikel mit einem mittleren Durchmesser zwischen 10 µm und 50 µm sowie ein Gleitmittel.

## Patentansprüche

1. Eine mindestens zweischichtige, coextrudierte Folie bestehend aus Polyethylen, Polypropylen oder deren Copolymeren oder aus Mischungen dieser Polymere, **dadurch gekennzeichnet, dass** sie mit Gleitmittel ausgerüstet ist und eine der äußeren Schichten anorganische oder organische Partikel enthält, die einen maximalen Partikeldurchmesser größer als die Dicke der ausgerüsteten Folienschicht aufweisen und die einen mittleren Partikeldurchmesser größer als 10 µm besitzen.

2. Folie gemäß Anspruch 1, **dadurch gekennzeichnet, dass** sie dreischichtig ist.

3. Folie gemäß Anspruch 1 oder 2, **dadurch gekennzeichnet, dass** eine der äußeren Schichten anorganische oder organische Partikel enthält, die einen mittleren Partikeldurchmesser zwischen 10 µm und 50 µm besitzen.

4. Folie gemäß einem der Ansprüche 1 bis 3, **dadurch gekennzeichnet, dass** eine der äußeren Schichten die anorganischen oder organischen Partikel in einer Menge zwischen 1000 ppm und 8000 ppm, bezogen auf die ausgerüstete Schicht, enthält.

5. Folie gemäß einem der Ansprüche 1 bis 4, **dadurch gekennzeichnet, dass** die Folie das Gleitmittel in einer Menge von mindestens 300 ppm, bezogen auf die gesamte Folie, enthält.

6. Folie gemäß einem der Ansprüche 1 bis 5, **dadurch gekennzeichnet, dass** die Folie als Gleitmittel Ölsäureamid oder Erucasäureamid enthält.

7. Verwendung einer Folie gemäß einem der Ansprüche 1 bis 6, als Heißsiegelschicht in Verbundfolien, wobei die durch die anorganischen oder organischen Partikel aufgerauhte Folienoberfläche der Folie gemäß einem der Ansprüche 1 bis 6 eine Außenseite der Verbundfolie bildet.

8. Verwendung der Folie gemäß einem der Ansprüche 1 bis 6 in nichttransparenten Verbundfolien.

9. Verwendung gemäß Anspruch 8, **dadurch gekennzeichnet, dass** die nichttransparente Verbundfolie eine Metallfolie, vorzugsweise eine Aluminiumfolie, enthält.

10. Verwendung einer Folie gemäß einem der Ansprüche 1 bis 6 bei der Herstellung von Verpackungen für Lebensmitteln.

11. Verbundfolie, **dadurch gekennzeichnet, dass** sie als Heißsiegelschicht eine Folie gemäß einem der Ansprüche 1 bis 6 aufweist, wobei die durch die anorganischen oder organischen Partikel aufgerauhte Folienoberfläche der Folie gemäß einem der Ansprüche 1 bis 6 eine Außenseite der Verbundfolie bildet.

## Claims

1. An at least two-layer, coextruded foil composed of polyethylene, of polypropylene, or of their copolymers, or of a mixture of these polymers, **characterized in that** it has been modified with lubricant, and one of the outer layers comprises inorganic or organic particles whose maximum particle diameter is greater than the thickness of the modified foil layer, and whose average particle diameter is greater than 10 µm.

2. Foil according to Claim 1, **characterized in that** it has three layers.

3. Foil according to Claim 1 or 2, **characterized in that** one of the outer layers comprises inorganic or organic particles whose average particle diameter is from 10 µm to 50 µm.

4. Foil according to any of Claims 1 to 3, **characterized in that** one of the outer layers comprises an amount of from 1000 ppm to 8000 ppm, based on the modified layer, of the inorganic or organic particles.

5. Foil according to any of Claims 1 to 4, **characterized in that** the foil comprises an amount of at least 300 ppm, based on the entire foil, of the lubricant.

6. Foil according to any of Claims 1 to 5, **characterized in that** the lubricant present in the foil comprises oleamide or erucamide.

7. Use of a foil according to any of Claims 1 to 6, as hot-sealable layer in composite foils, where that foil surface of the foil according to any of Claims 1 to 6 which has been roughened via the inorganic or organic particles forms an external side of the composite foil.

8. Use of the foil according to any of Claims 1 to 6 in non-transparent composite foils.

9. Use according to Claim 8, **characterized in that** the non-transparent composite foil comprises a metal foil, preferably an aluminium foil.

10. Use of a foil according to any of Claims 1 to 6 in the production of food-and-drink packaging.

11. Composite foil, **characterized in that** it has, as hot-sealable layer, a foil according to any of Claims 1 to 6, where that foil surface of the foil according to any of Claims 1 to 6 which has been roughened via the inorganic or organic particles forms an external side of the composite foil.

## Revendications

1. Feuille au moins en deux couches, coextrudée, constituée de polyéthylène, de polypropylène ou de leurs copolymères ou de mélanges de ces polymères, **caractérisée en ce qu'**elle est parée d'agent lubrifiant et qu'une des couches extérieures contient des particules inorganiques ou organiques qui présentent un diamètre maximal de particule plus grand que l'épaisseur de la couche de feuille parée et qui ont un diamètre moyen de particule supérieur à 10 *µ*m.

2. Feuille selon la revendication 1, **caractérisée en ce qu'**elle est en trois couches.

3. Feuille selon la revendication 1 ou 2, **caractérisée en ce qu'**une des couches extérieures contient des particules inorganiques ou organiques qui ont un diamètre moyen de particule compris entre 10 µm et 50 µm.

4. Feuille selon une des revendications 1 à 3, **caractérisée en ce qu'**une des couches extérieures contient les particules inorganiques ou organiques en une quantité comprise entre 1 000 ppm et 8 000 ppm, par rapport à la couche parée.

5. Feuille selon une des revendications 1 à 4, **caractérisée en ce que** la feuille contient l'agent lubrifiant en une quantité d'au moins 300 ppm, par rapport à la feuille entière.

6. Feuille selon une des revendications 1 à 5, **caractérisée en ce que** la feuille contient comme agent lubrifiant de l'amide d'acide oléique ou de l'amide d'acide érucique.

7. Utilisation d'une feuille selon une des revendications 1 à 6, comme couche thermosoudable dans des feuilles composites, dans laquelle la surface de la feuille selon une des revendications 1 à 6, qui est rendue rugueuse par les particules inorganiques ou organiques, forme un côté extérieur de la feuille composite.

8. Utilisation de la feuille selon une des revendications 1 à 6 dans des feuilles composites non transparentes.

9. Utilisation selon la revendication 8, **caractérisée en ce que** la feuille composite non transparente contient une feuille métallique, de préférence une feuille d'aluminium.

10. Utilisation d'une feuille selon une des revendications 1 à 6 pour la préparation d'emballages pour denrées alimentaires.

11. Feuille composite, **caractérisée en ce qu'**elle présente comme couche thermosoudable une feuille selon une des revendications 1 à 6, dans laquelle la surface de la feuille selon une des revendications 1 à 6, qui est rendue rugueuse par les particules inorganiques ou organiques, forme un côté extérieur de la feuille composite.
